# EUROPÄISCHE PATENTSCHRIFT

(11) **EP 1 118 173 B1**
(45) Veröffentlichungstag und Bekanntmachung des Hinweises auf die Patenterteilung: **09.04.2003**
(21) Anmeldenummer: 99970222.8
(22) Anmeldetag: 29.09.1999
(51) Int. Cl.: H04B 7/08

(54) **ANTENNENSCHALTUNG**
ANTENNA CIRCUIT
CIRCUIT D'ANTENNE

(30) Priorität: 02.10.1998 DE 19845534
(43) Veröffentlichungstag der Anmeldung: 25.07.2001
(73) Patentinhaber: ROBERT BOSCH GMBH, 70442 Stuttgart (DE)
(72) Erfinder: ZEITZ, Carsten, D-12203 Berlin (DE)
(86) Internationale Anmeldenummer: DE9903131
(87) Internationale Veröffentlichungsnummer: WO00021215

(56) Entgegenhaltungen:
- EP-A- 0 274 157
- DE-A- 4 204 490
- US-A- 5 559 838
- US-A- 5 697 075

## Beschreibung

### Stand der Technik

Die Erfindung geht von einer Antennenschaltung nach der Gattung des Hauptanspruchs aus.

Es sind bereits sogenannte Diversity-Antennenschaltungen bekannt, an die mehrere Antennen anschließbar und über jeweils einen Signalpfad mit einem Ausgang der entsprechenden Antennenschaltung verbindbar sind, wobei auf den Signalpfaden jeweils ein Antennensignal übertragbar ist. Bei diesen Diversity-Antennenschaltungen wird bei der Detektion von Störungen im Empfangssignal von einer Antenne auf die nächste Antenne umgeschaltet.

Aus der US 5 697 075 ist eine Diversity-Antennenanordnung für ein GPS-System (Global Positioning System) bekannt, bei dem selektiv eine Antenne mit der besseren Empfangsempfindlichkeit unter mehreren Antennen ausgewählt werden kann. Dabei sind mindestens zwei Antennen vorgesehen. Dabei sind Vergleichsmittel vorgesehen, die einen vom jeweiligen Signalpfad der Empfangsantennen ausgekoppelten und verstärkten Gleichanteil mit einer vorgegebenen Gleichspannung vergleichen. In Abhängigkeit des Vergleichs wird dann eine der beiden Antennen ausgewählt.

Aus der Druckschrift D1 (US 5 559 838) ist ebenfalls ein Diversity-Empfänger bekannt, der eine Vielzahl von Empfängern umfasst, von denen jeder eine Vielzahl von Signalen empfängt und einen Detektor umfasst, der ein gewünschtes Signal aus den empfangenen Signalen auswählt und ausgibt. Ein Pegelvergleicher vergleicht die Signalpegel der gewünschten Signale, die von den Detektoren abgegeben werden. Auf diese Weise wird das gewünschte Signal mit dem höchsten Signalpegel ermittelt. Dieses Signal wird dann ausgewählt und demoduliert.

### Vorteile der Erfindung

Die erfindungsgemäße Antennenschaltung mit den Merkmalen des Hauptanspruchs hat demgegenüber den Vorteil, daß eine Übertragung eines zweiten Antennensignals über einen zweiten Signalpfad gegenüber einer Übertragung eines ersten Antennensignals über einen ersten Signalpfad um einen vorgegebenen Dämpfungswert gedämpft erfolgt, daß eine Auswerteeinheit vorgesehen ist, die den Pegel eines Bewertungssignals ermittelt, das von einem an den Ausgang der Antennenschaltung übertragenen Antennensignal abgeleitet ist, daß eine Schaltvorrichtung vorgesehen ist, die nur den ersten Signalpfad mit dem Ausgang der Antennenschaltung verbindet, wenn der ermittelte Pegel unter einem ersten vorgegebenen Pegelwert liegt, und daß die Schaltvorrichtung nur den zweiten Signalpfad mit dem Ausgang der Antennenschaltung verbindet, wenn der ermittelte Pegel über dem ersten vorgegebenen Pegelwert liegt. Auf diese Weise kann der Empfang von Antennensignalen in Gebieten mit sehr starken Sendern verbessert werden. In Gebieten mit sehr starken Sendern ist der Empfang von Antennensignalen oft stark beeinträchtigt. Hohe Empfangspegel führen zu Intermodulation in Halbleiterbauelementen eines Antennenverstärkers und nachfolgenden Empfangsstufen und stören somit die empfangenen Antennensignale. Durch die Umschaltung zwischen verschiedenen Signalpfaden zur Verbindung des Ausgangs der Antennenschaltung mit der Antennenanschlußvorrichtung wird jedoch bewirkt, daß der Pegel am Ausgang der Antennenschaltung auf einen Pegelwert begrenzt wird, der nicht zu den beschriebenen Intermodulationen führt.

Durch die in den Unteransprüchen aufgeführten Maßnahmen sind vorteilhafte Weiterbildungen und Verbesserungen der im Hauptanspruch angegebenen Antennenschaltung möglich.

Besonders vorteilhaft ist es, daß für den Fall, in dem der zweite Signalpfad mit dem Ausgang der Antennenschaltung verbunden ist, die Schaltvorrichtung den zweiten Signalpfad vom Ausgang der Antennenschaltung trennt und den ersten Signalpfad mit dem Ausgang der Antennenschaltung verbindet, wenn die Auswerteeinheit einen Pegel ermittelt, der unterhalb eines zweiten vorgegebenen Pegelwertes liegt, wobei der zweite vorgegebene Pegelwert um mehr als der Dämpfungswert kleiner als der erste vorgegebene Pegelwert ist. Auf diese Weise wird eine Hysterese für das Umschalten zwischen den beiden Signalpfaden realisiert und somit ein zu häufiges Umschalten verhindert.

Vorteilhaft ist es, daß die Schaltvorrichtung mindestens ein vorzugsweise mechanisches Relais umfaßt, über das entweder der erste Signalpfad oder der zweite Signalpfad mit dem Ausgang der Antennenschaltung verbindbar ist. Auf diese Weise entstehen durch den Umschaltvorgang selbst keine Intermodulationen beim empfangenen Antennensignal.

Ein weiterer Vorteil ergibt sich, wenn die Schaltvorrichtung mindestens einen ersten Schalter und einen zweiten Schalter umfaßt, wobei der erste Signalpfad über den ersten Schalter und der zweite Signalpfad über den zweiten Schalter mit dem Ausgang der Antennenschaltung verbindbar ist und wobei der erste Schalter oder der zweite Schalter als elektronischer Schalter, vorzugsweise als PIN-Diode, ausgebildet und zwischen einem Anpassungsnetzwerk und dem Ausgang der Antennenschaltung angeordnet ist. Auf diese Weise werden besonders beim Empfang von HF-Antennensignalen Kosten und Platzaufwand für die Realisierung der Schaltvorrichtung eingespart. Durch die Anordnung des jeweiligen elektronischen Schalters zwischen dem Anpassungsnetzwerk und dem Ausgang der Antennenschaltung wird eine hohe Entkopplung zwischen den umzuschaltenden Signalpfaden gewährleistet, da die elektronischen Schalter somit jeweils in einem an die Impedanz des gesamten Empfangssystems angepaßten Punkt der Antennenschaltung eingesetzt werden.

Ein weiterer Vorteil ergibt sich, wenn zumindest dem ersten Schalter ein Dämpfungsglied vorgeschaltet ist. Auf diese Weise wird verhindert, daß an dem jeweiligen Schalter zu hohe Pegel auftreten, die bei Ausbildung des jeweiligen Schalters als elektronischer Schalter zu störenden Intermodulationen führen können. Eine besonders einfache Realisierung eines vorgeschalteten Dämpfungsgliedes kann durch mehrstufige Ausbildung des jeweiligen Schalters, insbesondere in Form zweier aufeinanderfolgender PIN-Dioden, erreicht werden. An der ersten Dämpfungsstufe oder PIN-Diode kann dabei das Entstehen von störenden Intermodulationsprodukten bei entsprechend hohem Pegel des empfangenen Antennensignals zugelassen werden, da diese dann durch die zweite Schaltstufe bzw. die folgende PIN-Diode abgeschaltet werden. Gleichzeitig wird dann der gedämpfte Signalpfad mit dem Ausgang der Antennenschaltung verbunden.

Eine besonders einfache Realisierung der Antennenschaltung ergibt sich, wenn an die Antennenanschlußvorrichtung eine zweite Antenne anschließbar ist, wobei die zweite Antenne eine um den vorgegebenen Dämpfungswert kleinere Antennenspannung als die erste Antenne liefert bzw. eine um den vorgegebenen Dämpfungswert kleinere Empfangsempfindlichkeit als die erste Antenne aufweist und die erste Antenne über den ersten Signalpfad und die zweite Antenne über den zweiten Signalpfad mit dem Ausgang der Antennenschaltung verbindbar ist.

Eine Einsparung von Antennen und Anpaßnetzwerken kann dadurch bewirkt werden, daß der zweite Signalpfad vom ersten Signalpfad abgeleitet ist und daß der zweite Signalpfad gegenüber dem ersten Signalpfad mit einer um den vorgegebenen Dämpfungswert höheren Dämpfung beaufschlagt ist.

Die Ableitung des zweiten Signalpfades vom ersten Signalpfad kann dabei in einfacher Weise transformatorisch oder über ein Widerstandsnetzwerk erfolgen.

Besonders vorteilhaft ist es, daß das Bewertungssignal einem an den Ausgang der Antennenschaltung übertragenen Antennensignal entspricht. Auf diese Weise kann das Bewertungssignal besonders einfach gebildet werden.

Vorteilhaft ist es, wenn das Bewertungssignal einem Regelsignal entspricht, das in einem an den Ausgang der Antennenschaltung angeschlossenen Rundfunkempfänger von einem empfangenen Antennensignal abgeleitet ist, wobei der Pegel des Regelsignals mit Intermodulationsstörungen im Antennensignal wächst. Auf diese Weise kann die Umschaltung zwischen den Signalpfaden allein in Abhängigkeit der im Rundfunkempfänger auftretenden Intermodulationen erfolgen, so daß unnötiges Umschalten vermieden wird.

### Zeichnung

Ausführungsbeispiele der Erfindung sind in der Zeichnung dargestellt und in der nachfolgenden Beschreibung näher erläutert. Es zeigen Figur 1 ein Blockschaltbild einer Antennenschaltung unter Verwendung mehrerer Antennen, Figur 2 ein Blockschaltbild einer Antennenschaltung unter Verwendung einer einzigen Antenne und einer transformatorischen Ableitung der Signalpfade und Figur 3 ein Blockschaltbild einer Antennenschaltung unter Verwendung einer einzigen Antenne und einer Ableitung der Signalpfade über Widerstandsnetzwerke.

### Beschreibung der Ausführungsbeispiele

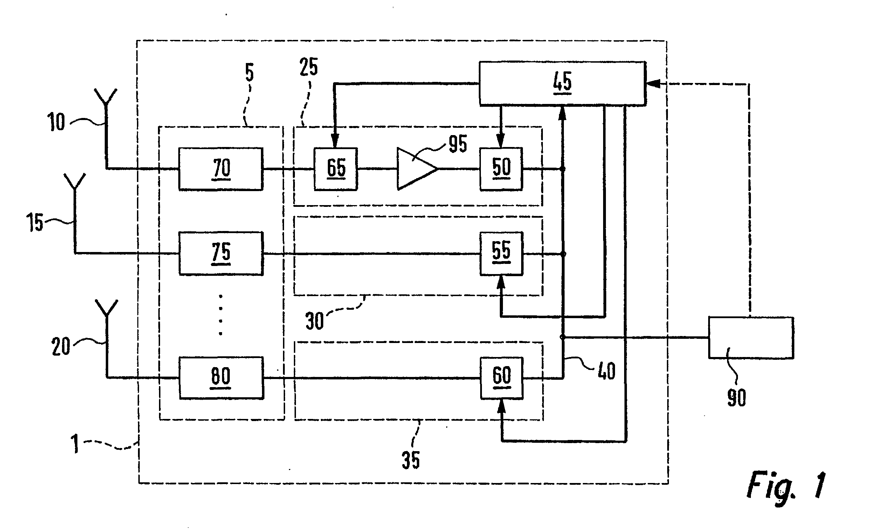

In Figur 1 kennzeichnet 1 eine Antennenschaltung, wie sie beispielsweise in einem Kraftfahrzeug zum Anschluß mindestens einer Antenne einerseits und eines Autoradios andererseits vorgesehen sein kann. Gemäß Figur 1 ist an die Antennenschaltung 1 über ein erstes Anpassungsnetzwerk 70 eine erste Antenne 10, über ein zweites Anpassungsnetzwerk 75 eine zweite Antenne 15 und über ein drittes Anpassungsnetzwerk 80 eine dritte Antenne 20 angeschlossen. Durch die in Figur 1 zwischen dem zweiten Anpassungsnetzwerk 75 und dem dritten Anpassungsnetzwerk 80 dargestellten Punkte ist angedeutet, daß die Antennenschaltung 1 auch zum Anschluß von mehr als drei Antennen über jeweils ein entsprechenden Anpassungsnetzwerk vorgesehen sein könnte. Andererseits könnte die Antennenschaltung 1 auch nur zum Anschluß der ersten Antenne 10 und der zweiten Antenne 15 vorgesehen sein.

Die Anpassungsnetzwerke 70, 75, 80 bilden eine Antennenanschlußvorrichtung, die über drei Signalpfade 25, 30, 35 mit einem Ausgang 40 der Antennenschaltung 1 verbindbar sind. Dabei ist das erste Anpassungsnetzwerk 70 über einen vierten Schalter 65, einen Verstärker 95 und einen ersten Schalter 50 mit dem Ausgang 40 verbindbar. Das zweite Anpassungsnetzwerk 75 ist über einen zweiten Schalter 55 mit dem Ausgang 40 verbindbar. Das dritte Anpassungsnetzwerk 80 ist über einen dritten Schalter 60 mit dem Ausgang 40 verbindbar. Der erste Signalpfad 25 umfaßt den vierten Schalter 65, den Verstärker 95 und den ersten Schalter 50. Der zweite Signalpfad 30 umfaßt den zweiten Schalter 55 und der dritte Signalpfad 35 umfaßt den dritten Schalter 60. Der Ausgang 40 ist auf eine Auswerteeinheit 45 geführt, die sämtliche Schalter 50, 55, 60, 65 ansteuert. An den Ausgang 40 ist außerdem ein Rundfunkempfänger 90, insbesondere ein Autoradio, angeschlossen.

Die Anpassungsnetzwerke 70, 75, 80 dienen der Anpassung der Impedanz der jeweils an das Anpassungsnetzwerk 70, 75, 80 angeschlossenen Antenne 10, 15, 20 an das als Rundfunkempfänger 90 ausgebildete Empfangssystem.

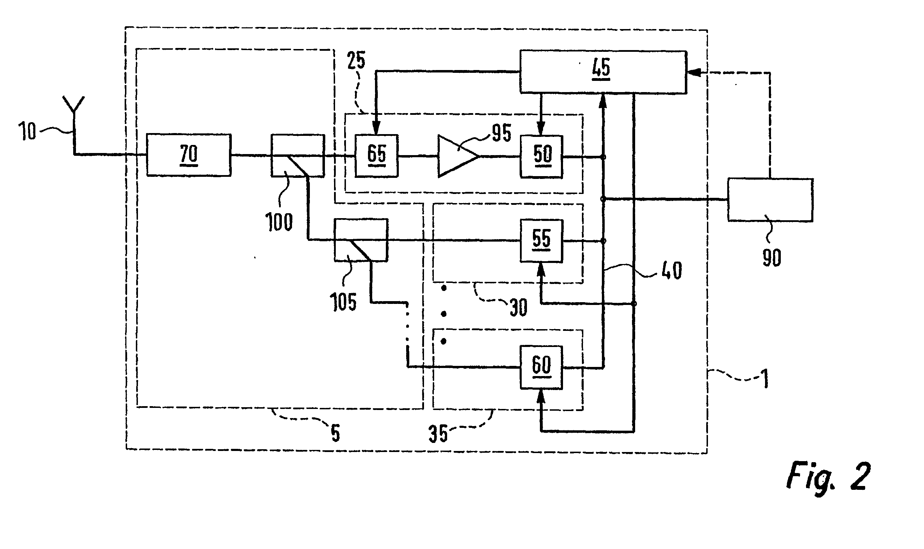

In Figur 2 ist eine weitere Ausführungsform der erfindungsgemäßen Antennenschaltung 1 in Form eines Blockschaltbildes dargestellt. In Figur 2 kennzeichnen gleiche Bezugszeichen gleiche Elemente wie in Figur 1. Der Aufbau der Antennenschaltung 1 gemäß Figur 2 entspricht dem Aufbau der Antennenschaltung 1 gemäß Figur 1, wobei jedoch die Antennenanschlußvorrichtung 5 anders aufgebaut ist und nur den Anschluß der ersten Antenne 10 vorsieht. Dabei umfaßt die Antennenanschlußvorrichtung 5 gemäß Figur 2 einen ersten Gabeltransformator 100 und einen zweiten Gabeltransformator 105. Die erste Antenne 10 ist dann über das erste Anpassungsnetzwerk 70 und den ersten Gabeltransformator 100 mit dem vierten Schalter 65 des ersten Signalpfades 25 verbunden. Ein von der ersten Antenne 10 empfangenes Antennensignal wird über das erste Anpassungsnetzwerk 70 und den ersten Gabeltransformator 100 im wesentlichen verlustfrei als ein erstes Antennensignal an den vierten Schalter 65 im ersten Signalpfad 25 übertragen. Andererseits wird vom ersten Gabeltransformator 100 aus dem ersten Antennensignal ein zweites Antennensignal mit einer vorgegebenen Dämpfung von beispielsweise 15dB abgeleitet und im folgenden über den zweiten Gabeltransformator 105 im wesentlichen verlustfrei an den zweiten Schalter 55 im zweiten Signalpfad 30 übertragen. Mittels dem zweiten Gabeltransformator 105 wird dann wiederum aus dem zweiten Antennensignal ein drittes Antennensignal mit einer vorgegebenen Dämpfung von beispielsweise ebenfalls 15dB abgeleitet und dem dritten Schalter 60 im dritten Signalpfad 35 zugeführt. Durch die Punkte zwischen dem zweiten Signalpfad 30 und dem dritten Signalpfad 35 ist in Figur 2 angedeutet, daß die Antennenanschschlußvorrichtung 5 auch über mehr als drei Signalpfade mit dem Ausgang 40 verbindbar ist, wobei die Antennensignale den entsprechenden Signalpfaden wie in Figur 2 dargestellt jeweils über einen Gabeltransformator gedämpft zugeführt werden.

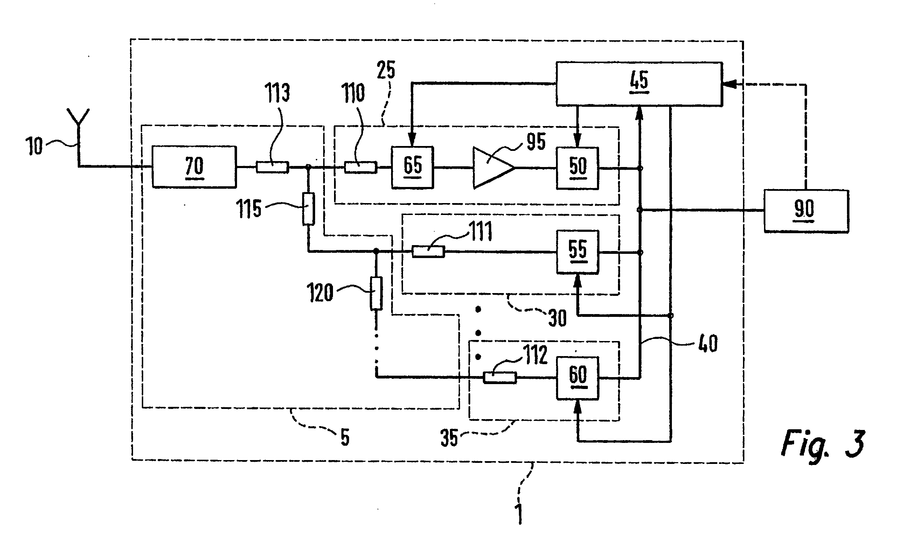

Figur 3 zeigt eine weitere Ausführungsform einer erfindungsgemäßen Antennenschaltung 1. Dabei kennzeichnen gleiche Bezugszeichen gleiche Elemente wie in Figur 1 und in Figur 2. Die Antennenschaltung 1 gemäß Figur 3 ist dabei gleich aufgebaut wie in Figur 1 und in Figur 2 mit dem Unterschied, daß jeder Signalpfad 25, 30, 35 noch einen Vorwiderstand 110, 111, 112 umfaßt und die Antennenanschlußvorrichtung 5 ebenfalls unterschiedlich ausgebildet ist. Dabei ist gemäß Figur 3 ebenfalls lediglich die erste Antenne 10 an die Antennenanschlußvorrichtung 5 angeschlossen. Die Antennenanschlußvorrichtung 5 umfaßt nun Abzweigwiderstände 113, 115, 120, über die die einzelnen Signalpfade 25, 30, 35 an die Antennenanschlußvorrichtung 5 angeschlossen sind. So ist die erste Antenne 10 über das erste Anpassungsnetzwerk 70 und einen ersten Abzweigwiderstand 113 an den ersten Signalpfad 25 bzw. an einen ersten Vorwiderstand 110 des ersten Signalpfades 25 angeschlossen. Zwischen dem ersten Abzweigwiderstand 113 und dem ersten Vorwiderstand 110 ist ein zweiter Abzweigwiderstand 115 angeschlossen, der andererseits mit einem zweiten Vorwiderstand 111 des zweiten Signalpfades 30 verbunden ist. Zwischen dem zweiten Abzweigwiderstand 115 und dem zweiten Vorwiderstand 111 ist ein dritter Abzweigwiderstand 120 angeschlossen, der andererseits mit einem dritten Vorwiderstand 112 des dritten Signalpfades 35 verbunden ist. Auch in Figur 3 ist durch die Punkte zwischen dem zweiten Signalpfad 30 und dem dritten Signalpfad 35 angedeutet, daß in entsprechender Weise weitere Signalpfade über Abzweigwiderstände abgezweigt werden können.

Bei den Ausführungsformen gemäß Figur 2 und Figur 3 kann es jedoch auch vorgesehen sein, jeweils lediglich den ersten Signalpfad 25 und den zweiten Signalpfad 30 vorzusehen.

Bei dem in Figur 1 dargestellten Ausführungsbeispiel ist es vorgesehen, daß die zweite Antenne 15 eine um einen vorgegebenen Dämpfungswert kleinere Empfangsempfindlichkeit als die erste Antenne 10 aufweist und daß die dritte Antenne 20 eine um den vorgegebenen Dämpfungswert kleinere Empfangsempfindlichkeit als die zweite Antenne 15 aufweist.

Die Dimensionierung der Abzweigwiderstände 113, 115, 120 gemäß Figur 3 wird so gewählt, daß das erste Antennensignal am Ausgang des Anpassungsnetzwerkes 70 im wesentlichen ungedämpft über den ersten Abzweigwiderstand 113 auf den ersten Signalpfad 25 und über den zweiten Abzweigwiderstand 115 um den vorgegebenen Dämpfungswert gedämpft auf den zweiten Signalpfad 30 als zweites Antennensignal gekoppelt wird. Über den dritten Abzweigwiderstand 120 kann dann entsprechend ein um den vorgegebenen Dämpfungswert gedämpftes drittes Antennensignal abgeleitet und auf den dritten Signalpfad 35 gekoppelt werden.

Gemäß Figur 3 kann beispielsweise für den ersten Abzweigwiderstand 113 und die Vorwiderstände 110, 111, 112 jeweils ein Wert von 5Ω, für den zweiten Abzweigwiderstand 115 und den dritten Abzweigwiderstand 120 jeweils ein Wert von 200Ω gewählt werden.

Durch die Ausführungsformen der Antennenschaltung 1 gemäß Figur 1, Figur 2 und Figur 3 wird jeweils erreicht, daß im ersten Signalpfad 25 das erste Antennensignal im wesentlichen ungedämpft an den Ausgang 40 übertragen wird. Im zweiten Signalpfad 30 wird das zweite Antennensignal um den vorgegebenen Dämpfungswert gegenüber dem ersten Antennensignal gedämpft zum Ausgang 40 übertragen. Auf dem dritten Signalpfad 35 wird das dritte Antennensignal um denselben vorgegebenen Dämpfungswert gegenüber dem zweiten Antennensignal gedämpft übertragen. Es kann auch vorgesehen sein, die Antennensignale auf den Signalpfaden 25, 30, 35 mit unterschiedlicher gegenseitiger Dämpfung zu übertragen.

Das erste Antennensignal im ersten Signalpfad 25 sollte möglichst ungedämpft über den Ausgang 40 an den Rundfunkempfänger 90 übertragen werden, so daß zur Erhöhung der Empfindlichkeit des durch die Antennenschaltung 1 und den Rundfunkempfänger 90 gebildeten Empfangssystems gegebenenfalls der Verstärker 95 im ersten Signalpfad 25 erforderlich ist.

Die Schalter 50, 55, 60, 65 können jeweils als PIN-Diode ausgebildet sein. Zunächst ist der erste Schalter 50 und der vierte Schalter 65 jeweils durchgeschaltet und der zweite Schalter 55 und der dritte Schalter 60 sind gesperrt. Somit wird zunächst nur das erste Antennensignal über den ersten Signalpfad 25 an den Ausgang 40 und von dort zum Rundfunkempfänger 90 übertragen. Dabei ermittelt die Auswerteeinheit 45 den Pegel des an den Ausgang 40 übertragenen Signals, das als Bewertungssignal dient. Solange der von der Auswerteeinheit 45 am Ausgang 40 ermittelte Pegel unter einem ersten vorgegebenen Pegelwert liegt, bleiben der erste Schalter 50 und der vierte Schalter 65 durchgeschaltet und der zweite Schalter 55 und der dritte Schalter 60 gesperrt, so daß nur das erste Antennensignal über den ersten Signalpfad 25 an den Ausgang 40 übertragen wird. Überschreitet der Pegel am Ausgang 40 den ersten vorgegebenen Pegelwert, so veranlaßt die Auswerteeinheit 45, den ersten Schalter 50 und den vierten Schalter 65 zu sperren und den zweiten Schalter 55 durchzuschalten, so daß nur das zweite Antennensignal über den zweiten Signalpfad 30 an den Ausgang 40 übertragen wird. Auf diese Weise kann der Pegel am Ausgang 40 zur Unterdrückung von Intermodulation vor allem in Gebieten mit sehr starken Sendern verringert werden. Reicht die Dämpfung im zweiten Signalpfad nicht aus, kann in entsprechender Weise auch der zweite Schalter 55 gesperrt und der dritte Schalter 60 durchgeschaltet werden, so daß nur das dritte Antennensignal über den dritten Signalpfad 35 an den Ausgang 40 mit entsprechend erhöhter Dämpfung gelangt.

Für den Fall, daß nur das zweite Antennensignal über den zweiten Signalpfad 30 an den Ausgang 40 übertragen wird, d. h. der erste Schalter 50, der dritte Schalter 60 und der vierte Schalter 65 gesperrt sind und der zweite Schalter 55 durchgeschaltet ist und die Auswerteeinheit 45 detektiert, daß der Pegel am Ausgang 40 unter einen zweiten vorgegebenen Pegelwert, der kleiner als der erste vorgegebene Pegelwert ist, absinkt, veranlaßt die Auswerteeinheit 45, den zweiten Schalter 55 zu sperren und den ersten Schalter 50 und den vierten Schalter 65 durchzuschalten, so daß nur das erste Antennensignal über den ersten Singnalpfad 25 an den Ausgang 40 übertragen wird. Der dritte Schalter 60 bleibt dabei weiterhin gesperrt. Durch die Wahl des zweiten vorgegebenen Pegelwertes in entsprechendem Abstand, d.h. um mehr als den Dämpfungswert unterhalb des ersten vorgegebenen Pegelwertes wird eine Hysterese für die Umschaltung zwischen den einzelnen Signalpfaden erreicht, so daß zu häufiges Umschalten zwischen den an den Rundfunkempfänger 90 zu übertragenden Antennensignalen und damit eine Beeinträchtigung ihrer akustischen Wiedergabe am Rundfunkempfänger 90 vermieden wird.

Gemäß den beschriebenen Ausführungsbeispielen sind die Schalter 50, 55, 60, 65 als steuerbare elektronische Schalter in Form jeweils einer PIN-Diode ausgebildet. Es können jedoch auch andere steuerbare elektronische Schalter beispielsweise Transistoren Verwendung finden. Da die als elektronische Schalter ausgebildeten Schalter 50, 55, 60, 65 an jeweils einer Stelle der Antennenschaltung 1 angeordnet sind, die an eine Systemimpedanz des Rundfunkempfängers 90 angepaßt ist, ist eine hohe Entkopplung zwischen den umzuschaltenden Signalpfaden 25, 30, 35 gewährleistet. Als PIN-Dioden oder Transistoren ausgebildete Schalter 50, 55, 60, 65 haben allerdings den Nachteil, daß sie ebenfalls Intermodulation erzeugen können. Deshalb müssen sie jeweils an einer Stelle in der Antennenschaltung 1 angeordnet werden, an der keine hohen Pegel auftreten. Im ersten Signalpfad 25, der wie beschrieben das von der ersten Antenne 10 empfangene erste Antennensignal möglichst ungedämpft an den Ausgang 40 übertragen soll, ist deshalb eine zusätzliche Dämpfung für den Fall erforderlich, daß der als PIN-Diode ausgebildete erste Schalter 50 wegen zu hohen Pegels des ersten Antennensignals gesperrt ist. Die für den Fall vorgesehene zusätzliche Dämpfung im ersten Signalpfad 25 verhindert, daß Intermodulationsprodukte über den gesperrten ersten Schalter 50 an den Rundfunkempfänger 90 gelangen. Ist bei entsprechend niedrigem Pegel des ersten Antennensignals der erste Schalter 50 durchgeschaltet, so ist die zusätzliche Dämpfung im ersten Signalpfad 25 nicht erforderlich, da das erste Antennensignal ja möglichst ungedämpft sein soll. Daher bietet sich die Verwendung des vierten Schalters 65 im ersten Signalpfad 25 an, wobei der vierte Schalter 65 wie beschrieben als PIN-Diode ausgebildet sein kann und die Funktion der zusätzlichen Dämpfung im ersten Signalpfad 25 bei Sperrung des ersten Schalters 50 wahrnehmen kann. Wird der erste Schalter 50 durchgeschaltet, so kann der vierte Schalter 65 ebenfalls durchgeschaltet und die zusätzliche Dämpfung im ersten Signalpfad 25 entfernt werden. Da das erste Antennensignal nur bei entsprechend niedrigem Pegel an den Ausgang 40 übertragen wird, entstehen bei durchgeschaltetem ersten Schalter 50 und bei durchgeschaltetem vierten Schalter 65 im wesentlichen keine Intermodulationsprodukte. Sind der erste Schalter 50 und der vierte Schalter 65 jedoch gesperrt, so wirken sie als zweistufiger Schalter, der in seiner ersten Stufe am vierten Schalter 65 den Pegel des ersten Antennensignals dämpft, wobei Intermodulationsprodukte entstehen und in seiner zweiten Stufe am ersten Schalter 50 das gedämpfte erste Antennensignal und die entstandenen Intermodulationsprodukte vollends unterdrückt. Zur Verhinderung der Entstehung von Intermodulationsprodukten am zweiten Schalter 55 und/oder am dritten Schalter 60 können der zweite Schalter 55 und/oder der dritte Schalter 60 ebenfalls in der beschriebenen Weise mehrstufig ausgebildet werden.

Die Schalter 50, 55, 60, 65 bilden eine Schaltvorrichtung, die alternativ auch in Form mindestens eines vorzugsweise mechanischen Relais realisiert werden können, über das entweder der erste Signalpfad 25, der zweite Signalpfad 30 oder der dritte Signalpfad 35 mit dem Ausgang 40 der Antennenschaltung 1 verbindbar ist. Das mindestens eine Relais wird dabei ebenfalls von der Auswerteeinheit 45 angesteuert, so daß in Abhängigkeit des am Ausgang 40 ermittelten Pegels in der beschriebenen Weise entweder der erste Signalpfad 25, der zweite Signalpfad 30 oder der dritte Signalpfad 35 mit dem Ausgang 40 verbunden ist. Das Relais sollte dabei vor dem ersten aktiven Bauteil der Antennenschaltung 1 bzw. des Rundfunkempfängers 90, das Intermodulationsprodukte erzeugen kann, angeordnet sein, damit diesem ersten aktiven Bauteil bereits ein gedämpftes Antennensignal zugeführt und somit Intermodulation an diesem ersten aktiven Bauteil vermieden wird.

Die Auswertung des Pegels am Ausgang 40 durch die Auswerteeinheit 45 kann breitbandig durch Auswertung des Bewertungssignals über einen verhältnismäßig großen Bereich des Empfangsspektrums erfolgen. Es kann aber auch optional vorgesehen sein, ein Regelsignal oder eine Regelspannung aus dem Rundfunkempfänger 90 als Bewertungssignal zur Steuerung der Schalter 50, 55, 60, 65 über die Auswerteeinheit 45 in der beschriebenen Weise zu verwenden, wobei diese Regelspannung Großsignalstörungen aufgrund von Intermodulationen, die durch starke Sender im Empfangsgebiet verursacht werden, in dem dem Rundfunkempfänger 90 zugeführten Signal bewertet. Die Regelspannung wird dabei im Rundfunkempfänger 90 ermittelt und der Auswerteeinheit 45 gemäß der gestrichelten Darstellung in Figur 1, in Figur 2 und in Figur 3 zugeführt, wobei der Pegel der Regelspannung mit den empfangenen Intermodulationsprodukten ansteigt. Sinnvoll ist diese Variante vor allem dann, wenn im Rundfunkempfänger 90 eine Regelspannung zur Verfügung steht, die aus der Detektion solcher Großsignalstörungen in dem dem Rundfunkempfänger 90 zugeführten Signal abgeleitet wird. Diese Regelspannung kann dann der Auswerteschaltung 45 zur Steuerung der Schalter 50, 55, 60, 65 zugeführt werden.

Die Bedämpfung der Antennensignale auf dem zweiten Signalpfad 30 und dem dritten Signalpfad 35 durch Verwendung der Gabeltransformatoren 100, 105 gemäß Figur 2, der Abzweigwiderstände 113, 115, 120 gemäß Figur 3 oder durch Verwendung mehrerer Antennen 10, 15, 20 mit unterschiedlicher Empfangsempfindlichkeit ist rein passiv, so daß dabei keine Intermodulationsprodukte entstehen.

Insbesondere beim Ausführungsbeispiel gemäß Figur 2 können die Gabeltransformatoren 100, 105 so dimensioniert werden, daß ihre Durchgangsdämpfung maximal 1,5dB beträgt und somit vergleichsweise gering ist und daß ihre Abzweigdämpfung 15dB oder 20dB beträgt und damit vergleichsweise groß ist. Der erste Gabeltransformator 100 überträgt somit das erste Antennensignal im wesentlichen ungedämpft auf den ersten Signalpfad 25 und der zweite Gabeltransformator 105 überträgt das zweite Antennensignal im wesentlichen ungedämpft auf den zweiten Signalpfad 30, wobei das zweite Antennensignal durch transformatorischen Abzweig vom ersten Antennensignal über den ersten Gabeltransformator 100 gegenüber dem ersten Antennensignal um 15dB bzw. 20dB gedämpft ist. Entsprechend ist das durch transformatorischen Abzweig über den zweiten Gabeltransformator 105 vom zweiten Antennensignal abgeleitete dritte Antennensignal, das auf den dritten Signalpfad 35 geführt wird, gegenüber dem zweiten Antennensignal ebenfalls um 15dB bzw. 20dB gedämpft.

Die Dämpfung der Antennensignale in den Signalpfaden 25, 30, 35 gemäß Figur 3 erfolgt mit Hilfe der Abzweigwiderstände 113, 115, 120 nach dem Spannungsteilerprinzip.

Gemäß dem Ausführungsbeispiel nach Figur 1 wird die Dämpfung der Antennensignale auf den Signalpfaden 25, 30, 35 durch die unterschiedliche Empfangsempfindlichkeit der Antennen 10, 15, 20 erreicht. Bei den Antennen 10, 15, 20 kann es sich beispielsweise um Scheibenantennen und/oder Teleskopund/oder Kurzstabantennen eines Kraftfahrzeuges handeln.

Dabei werden bei der Antennenschaltung 1 gemäß Figur 1 die Antennensignale auf den einzelnen Signalpfaden 25, 30, 35 im Gegensatz zu den Ausführungsformen nach Figur 2 und Figur 3 nicht durch Ableitung voneinander gebildet, sondern über jeweils eine eigene Antenne 10, 15, 20 dem entsprechenden Signalpfad 25, 30, 35 zugeführt.

## Patentansprüche

1. Antennenschaltung (1) mit einer Antennenanschlußvorrichtung (5), an die mindestens eine erste Antenne (10) anschließbar ist, wobei die Antennenanschlußvorrichtung (5) über mindestens zwei Signalpfade (25, 30, 35) mit einem Ausgang (40) der Antennenschaltung (1) verbindbar ist, wobei auf den Signalpfaden (25, 30, 35) jeweils ein Antennensignal übertragbar ist, **dadurch gekennzeichnet, daß** eine Übertragung eines zweiten Antennensignals über einen zweiten Signalpfad (30) gegenüber einer Übertragung eines ersten Antennensignals über einen ersten Signalpfad (25) um einen vorgegebenen Dämpfungswert gedämpft erfolgt, daß eine Auswerteeinheit (45) vorgesehen ist, die den Pegel eines Bewertungssignals ermittelt, das von einem an den Ausgang (40) der Antennenschaltung (1) übertragenen Antennensignal abgeleitet ist, daß eine Schaltvorrichtung (50, 55, 60, 65) vorgesehen ist, die nur den ersten Signalpfad (25) mit dem Ausgang (40) der Antennenschaltung (1) verbindet, wenn der ermittelte Pegel des Bewertungssignals unter einem ersten vorgegebenen Pegelwert liegt, und daß die Schaltvorrichtung (50, 55, 60, 65) nur den zweiten Signalpfad (30) mit dem Ausgang (40) der Antennenschaltung (1) verbindet, wenn der ermittelte Pegel des Bewertungssignals über dem ersten vorgegebenen Pegelwert liegt.

2. Antennenschaltung (1) nach Anspruch 1, **dadurch gekennzeichnet, daß** für den Fall, in dem der zweite Signalpfad (30) mit dem Ausgang (40) der Antennenschaltung (1) verbunden ist, die Schaltvorrichtung (50, 55, 60, 65) den zweiten Signalpfad (30) vom Ausgang (40) der Antennenschaltung (1) trennt und den ersten Signalpfad (25) mit dem Ausgang (40) der Antennenschaltung (1) verbindet, wenn die Auswerteeinheit (45) einen Pegel des Bewertungssignals ermittelt, der unterhalb eines zweiten vorgegebenen Pegelwertes liegt, wobei der zweite vorgegebene Pegelwert um mehr als der Dämpfungswert kleiner als der erste vorgegebene Pegelwert ist.

3. Antennenschaltung (1) nach Anspruch 1 oder 2, **dadurch gekennzeichnet, daß** die Schaltvorrichtung (50, 55, 60, 65) mindestens ein vorzugsweise mechanisches Relais umfaßt, über das genau einer der Signalpfade (25, 30, 35) mit dem Ausgang (40) der Antennenschaltung (1) verbindbar ist.

4. Antennenschaltung (1) nach Anspruch 1, 2 oder 3, **dadurch gekennzeichnet, daß** die Schaltvorrichtung (50, 55, 60, 65) mindestens einen ersten Schalter (50) und einen zweiten Schalter (55) umfaßt, wobei der erste Signalpfad (25) über den ersten Schalter (50) und der zweite Signalpfad (30) über den zweiten Schalter (55) mit dem Ausgang (40) der Antennenschaltung (1) verbindbar ist.

5. Antennenschaltung (1) nach Anspruch 4, **dadurch gekennzeichnet, daß** der erste Schalter (50) oder der zweite Schalter (55) als elektronischer Schalter, vorzugsweise als PIN-Diode, ausgebildet und zwischen einem Anpassungsnetzwerk (70, 75) und dem Ausgang (40) der Antennenschaltung (1) angeordnet ist.

6. Antennenschaltung (1) nach Anspruch 4 oder 5, **dadurch gekennzeichnet, daß** zumindest dem ersten Schalter (50) ein Dämpfungsglied (65) vorgeschaltet ist.

7. Antennenschaltung (1) nach Anspruch 4, 5 oder 6, **dadurch gekennzeichnet, daß** der erste Schalter (50) oder der zweite Schalter (55) mehrstufig, insbesondere in Form zweier aufeinanderfolgender PIN-Dioden, ausgeführt ist.

8. Antennenschaltung (1) nach einem der vorherigen Ansprüche, **dadurch gekennzeichnet, daß** an die Antennenanschlußvorrichtung (5) eine zweite Antenne (15) anschließbar ist, wobei die zweite Antenne (15) eine um den vorgegebenen Dämpfungswert kleinere Empfangsempfindlichkeit als die erste Antenne (10) aufweist und die erste Antenne (10) über den ersten Signalpfad (25) und die zweite Antenne (15) über den zweiten Signalpfad (30) mit dem Ausgang (40) der Antennenschaltung (1) verbindbar ist.

9. Antennenschaltung (1) nach einem der vorherigen Ansprüche, **dadurch gekennzeichnet, daß** der zweite Signalpfad (30) vom ersten Signalpfad (25) abgeleitet ist und daß der zweite Signalpfad (30) gegenüber dem ersten Signalpfad (25) mit einer um den vorgegebenen Dämpfungswert höheren Dämpfung beaufschlagt ist.

10. Antennenschaltung (1) nach Anspruch 9, **dadurch gekennzeichnet, daß** der zweite Signalpfad (30) transformatorisch vom ersten Signalpfad (25) abgeleitet ist.

11. Antennenschaltung (1) nach Anspruch 9 oder 10, **dadurch gekennzeichnet, daß** der zweite Signalpfad (30) über ein Widerstandsnetzwerk (113, 115) vom ersten Signalpfad (25) abgeleitet ist.

12. Antennenschaltung (1) nach einem der vorherigen Ansprüche, **dadurch gekennzeichnet, daß** das Bewertungssignal einem an den Ausgang (40) der Antennenschaltung (1) übertragenen Antennensignal entspricht.

13. Antennenschaltung (1) nach einem der vorherigen Ansprüche, **dadurch gekennzeichnet, daß** das Bewertungssignal einem Regelsignal entspricht, das in einem an den Ausgang (40) der Antennenschaltung (1) angeschlossenen Rundfunkempfänger (90) von einem empfangenen Antennensignal abgeleitet ist, wobei der Pegel des Regelsignals mit Intermodulationsstörungen im Antennensignal wächst.

## Claims

1. Antenna circuit (1) having an antenna connecting apparatus (5), to which at least one first antenna (10) can be connected, in which case the antenna connecting apparatus (5) can be connected via at least two signal paths (25, 30, 35) to one output (40) of the antenna circuit (1), and in which case an antenna signal can be transmitted on each of the signal paths (25, 30, 35), **characterized in that** a second antenna signal is transmitted via a second signal path (30), attenuated by a predetermined attenuation level in comparison to transmission of a first antenna signal via a first signal path (25), **in that** an evaluation unit (45) is provided, which determines the level of an assessment signal which is derived from an antenna signal transmitted to the output (40) of the antenna circuit (1), **in that** a switching apparatus (50, 55, 60, 65) is provided, which connects only the first signal path (25) to the output (40) of the antenna circuit (1) when the determined level of the assessment signal is below a first predetermined level value, and **in that** the switching apparatus (50, 55, 60, 65) connects only the second signal path (30) to the output (40) of the antenna circuit (1) when the determined level of the assessment signal is above the first predetermined level value.

2. Antenna circuit (1) according to Claim 1, **characterized in that**, in the situation in which the second signal path (30) is connected to the output (40) of the antenna circuit (1), the switching apparatus (50, 55, 60, 65) disconnects the second signal path (30) from the output (40) of the antenna circuit (1) and connects the first signal path (25) to the output (40) of the antenna circuit (1) if the evaluation unit (45) determines that the assessment signal level is below a second predetermined level value, with the second predetermined level value being below the first predetermined level value by more than the attenuation value.

3. Antenna circuit (1) according to Claim 1 or 2, **characterized in that** the switching apparatus (50, 55, 60, 65) has at least one preferably mechanical relay, via which one and only one of the signal paths (25, 30, 35) can be connected to the output (40) of the antenna circuit (1).

4. Antenna circuit (1) according to Claim 1, 2 or 3, **characterized in that** the switching apparatus (50, 55, 60, 65) has at least one first switch (50) and one second switch (55), in which case the first signal path (25) can be connected to the output (40) of the antenna circuit (1) via the first switch (50), and the second signal path (30) can be connected to the output (40) of the antenna circuit (1) via the second switch (55).

5. Antenna circuit (1) according to Claim 4, **characterized in that** the first switch (50) or the second switch (55) is in the form of an electronic switch, preferably a PIN diode, and is arranged between a matching network (70, 75) and the output (40) of the antenna circuit (1).

6. Antenna circuit (1) according to Claim 4 or 5, **characterized in that** at least the first switch (50) is preceded by an attenuating element (65).

7. Antenna circuit according to Claim 4, 5 or 6, **characterized in that** the first switch (50) or the second switch (55) has a number of stages, in particular being in the form of two successive PIN diodes.

8. Antenna circuit (1) according to one of the preceding claims, **characterized in that** a second antenna (15) can be connected to the antenna connecting apparatus (5), in which case the second antenna (15) has a reception sensitivity which is less than that of the first antenna (10) by the predetermined attenuation value, and the first antenna (10) can be connected to the output (40) of the antenna circuit (1) via the first signal path (25), and the second antenna (15) can be connected to the output (40) of the antenna circuit (1) via the second signal path (30).

9. Antenna circuit (1) according to one of the preceding claims, **characterized in that** the second signal path (30) is tapped off the first signal path (25), and **in that** the second signal path (30) has attenuation applied to it which is greater than that of the first signal path (25) by the predetermined attenuation value.

10. Antenna circuit (1) according to Claim 9, **characterized in that** the second signal path (30) is tapped off the first signal path (25) by transformer.

11. Antenna circuit (1) according to Claim 9 or 10, **characterized in that** the second signal path (30) is tapped off the first signal path (25) via a resistor network (113, 115).

12. Antenna circuit (1) according to one of the preceding claims, **characterized in that** the assessment signal corresponds to an antenna signal which is transmitted to the output (40) of the antenna circuit (1).

13. Antenna circuit (1) according to one of the preceding claims, **characterized in that** the assessment signal corresponds to a control signal, which is tapped off from a received antenna signal in a broadcast radio receiver (90) which is connected to the output (40) of the antenna circuit (1), with the level of the control signal increasing with the intermodulation interference in the antenna signal.

## Revendications

1. Circuit d'antenne (1) comportant un dispositif de branchement d'antenne (5) auquel est reliée au moins une première antenne (10), le dispositif de branchement d'antenne (5) étant relié par au moins deux chemins de signal (25, 30, 35) à une sortie (40) du circuit d'antenne (1), les chemins de signal (25, 30, 35) transmettant chaque fois un signal d'antenne,
**caractérisé en ce qu'**
- une transmission d'un second signal d'antenne se fait par un second chemin de signal (30) par rapport à la transmission d'un premier signal d'antenne par un premier chemin de signal (25) de façon amortie selon une valeur d'amortissement prédéterminée,
- une unité d'exploitation (45) détermine le niveau d'un signal d'évaluation déduit d'un signal d'antenne transmis par la sortie (40) du circuit d'antenne (1),
- un dispositif de commutation (50, 55 ; 60, 65) relie seulement le premier chemin de signal (25) à la sortie (40) du circuit d'antenne (1) si le niveau obtenu du signal d'évaluation est inférieur à un premier seuil, et
- le dispositif de commutation (50, 55 ; 60, 65) ne relie que le second chemin de signal (30) à la sortie (40) du circuit d'antenne (1) si le niveau obtenu du signal d'évaluation dépasse le premier niveau prédéterminé.

2. Circuit d'antenne (1) selon la revendication 1,
**caractérisé en ce qu'**
au cas où le second chemin de signal (30) est relié à la sortie (40) du circuit d'antenne (1), le dispositif de commutation (50, 55 ; 60, 65) sépare le second chemin de signal (30) de la sortie (40) du circuit d'antenne (1) et relie le premier chemin de signal (25) à la sortie (40) du circuit d'antenne (1), si l'unité d'exploitation (45) détermine un niveau du signal d'évaluation inférieur à un second seuil prédéterminé, ce second seuil prédéterminé étant inférieur de plus de la valeur d'amortissement au premier seuil prédéterminé.

3. Circuit d'antenne (1) selon l'une quelconque des revendications 1 ou 2,
**caractérisé en ce que**
le dispositif de commutation (50, 55 ; 60, 65) comprend au moins un relais de préférence mécanique par lequel précisément l'un des chemins de signal (25, 30, 35) peut être relié à la sortie (40) du circuit d'antenne (1).

4. Circuit d'antenne (1) selon l'une quelconque des revendications 1, 2, 3,
**caractérisé en ce que**
le dispositif de commutation (50, 55 ; 60, 65) comprend au moins un premier commutateur (50) et un second commutateur (55),
le premier chemin de signal (25) étant relié par le premier commutateur (50) et le second chemin de signal (30) étant relié par le second commutateur (55) à la sortie (40) du circuit d'antenne (1).

5. Circuit d'antenne (1) selon la revendication 4,
**caractérisé en ce que**
le premier commutateur (50) ou le second commutateur (55) sont des commutateurs électroniques de préférence des diodes PIN et le circuit d'antenne se trouve entre un réseau adaptateur (70, 75) et la sortie (40).

6. Circuit d'antenne (1) selon l'une quelconque des revendications 4 ou 5,
**caractérisé par**
au moins un élément amortisseur (65) en amont du premier commutateur (50).

7. Circuit d'antenne (1) selon l'une quelconque des revendications 4, 5, 6,
**caractérisé en ce que**
le premier commutateur (50) ou le second commutateur (55) sont à plusieurs niveaux notamment sous la forme de deux diodes PIN successives.

8. Circuit d'antenne (1) selon l'une quelconque des revendications précédentes,
**caractérisé par**
une seconde antenne (15) qui peut se brancher sur le dispositif de branchement d'antenne (5),
cette seconde antenne (15) ayant une sensibilité de réception réduite de la valeur d'amortissement prédéterminée par rapport à la sensibilité de la première antenne (10), et
la première antenne (10) peut être reliée par le premier chemin de signal (25) et la seconde antenne (15) par le second chemin de signal (30) à la sortie (40) du circuit d'antenne (1).

9. Circuit d'antenne (1) selon l'une quelconque des revendications précédentes,
**caractérisé en ce que**
le second chemin de signal (30) dérive du premier chemin de signal (25), et
le second chemin de signal (30) possède une valeur d'amortissement prédéterminée, plus élevée que celle du premier chemin de signal (25).

10. Circuit d'antenne (1) selon la revendication 9,
**caractérisé en ce que**
le second chemin de signal (30) est dérivé par transformation du premier chemin de signal (25).

11. Circuit d'antenne (1) selon l'une quelconque des revendications 9 ou 10,
**caractérisé en ce que**
le second chemin de signal (30) est dérivé du premier chemin de signal (25) par un réseau de résistance (113, 115).

12. Circuit d'antenne (1) selon l'une quelconque des revendications précédentes
**caractérisé en ce que**
le signal d'évaluation correspond à un signal d'antenne transmis à la sortie (40) du circuit d'antenne (1).

13. Circuit d'antenne (1) selon l'une quelconque des revendications précédentes,
**caractérisé en ce que**
le signal d'évaluation correspond à un signal de régulation déduit d'un signal d'antenne reçu par un récepteur radiophonique (90) relié à la sortie (40) du circuit d'antenne (1), et le niveau du signal de régulation augmente avec les perturbations d'intermodulations dans le signal d'antenne.
